# EUROPÄISCHE PATENTSCHRIFT

(11) **EP 2 064 457 B1**
(45) Veröffentlichungstag und Bekanntmachung des Hinweises auf die Patenterteilung: **12.05.2010**
(21) Anmeldenummer: 07803149.9
(22) Anmeldetag: 03.09.2007
(51) Int. Cl.: F16D 1/112, F16L 17/04, F16L 37/098

(54) **VERBINDUNG EINES ERSTEN MIT EINEM ZWEITEN ZYLINDRISCHEN BAUTEIL UND VERFAHREN ZUR MONTAGE DES ERSTEN UND DES ZWEITEN BAUTEILES**
CONNECTION OF A FIRST COMPONENT TO A SECOND CYLINDRICAL COMPONENT AND METHOD FOR MOUNTING OF THE FIRST AND SECOND COMPONENTS
LIAISON D'UN PREMIER ÉLÉMENT CYLINDRIQUE AVEC UN SECOND ÉLÉMENT CYLINDRIQUE ET PROCÉDÉ POUR LE MONTAGE DU PREMIER ET DU SECOND ÉLÉMENT

(30) Priorität: 20.09.2006 DE 102006044109
(43) Veröffentlichungstag der Anmeldung: 03.06.2009
(73) Patentinhaber: ZF Friedrichshafen AG, 88038 Friedrichshafen (DE)
(72) Erfinder: SKRABS, Alfred, 66271 Sitterswald (DE)
(86) Internationale Anmeldenummer: PCT/EP2007/059162
(87) Internationale Veröffentlichungsnummer: WO 2008/034711

(56) Entgegenhaltungen:
- EP-A- 0 840 050
- WO-A-02/099284
- WO-A-2005/115875
- DE-A1-102004 005 091
- DE-U1- 8 900 620
- GB-A- 2 334 562
- GB-A- 2 371 574

## Beschreibung

Die Erfindung betrifft eine Verbindung eines ersten mit einem zweiten zylindrischen.

Zylindrische Bauteile, insbesondere Hohlzylinder, Stufenzylinder oder topfförmig ausgebildete Zylinder werde beispielsweise bei Automatikgetrieben für Kraftfahrzeuge eingesetzt. Derartige Zylinder nehmen in sich Planetenradsätze und/oder Schaltelemente in Form von Kupplungen oder Bremsen auf, wobei sie auch innen- oder Außenverzahnungen zur Verbindung mit anderen Bauteilen, z. B. Innen- oder Außenlamellen aufweisen können. Ein derartiges Bauteil ist in der älteren, nicht vonreröffentlichten Gebrauchsmusteranmeldung der Anmelderin DE 202006011424.6 als Zylinder, der beispielhaft als Innen lamellenträger ausgebildet ist, offenbart. Dabei umschließt der Zylinder einen eingangsseitigen Planetenradsatz sowie zwei Schaltelemente. Ein solcher Zylinder wird als Tiefziehteil aus einem Tiefziehstahl hergestellt, wobei der Länge des Zylinders fertigungstechnische Grenzen gesetzt sind. Bei modernen Getriebeenbvicklungen werden zylindrische Bauteile mit einer größeren axialen Länge benötigt, als dies durch herkömmliche Tiefziehverfahren möglich ist. In diesem Falle können derartige Bauteile durch Drückwalzen hergestellt werden, ein Verfahren, welches beispielsweise aus der DE 43 13 648 C2 oder der EP 0 955 110 B1 bekannt ist. Durch Drückwalzen hergestellte zylindrische Bauteile sind jedoch teurer in der Herstellung.

Die GB 2 371 574 A zeigt eine Verbindung eines ersten mit einem zweiten zylindrischen Bauteils zur Übertragung von Umfangs- und Axialkräften, wobei das erste Bauteil auf dem Umfang und stimseitig angeordnete Mitnahmeelemente aufweist, und wobei das zweite Bauteil den Mitnahmeetementen zugeordnete Fenster aufweist, und wobei die Bauteile stirnseitig zur Bildung eines Formschlusses zwischen Mitnahmeelementen und Fenster ineinander steckbar sind.

Aus der DE 89 00 620 U1 ist ein Verbindungsstecker bekannt, der unter Herstellung einer zumindest im wesentlichen fluiddichten und druckfesten Verbindung unmittelbar auf einem Sockelteil fixierbar ist, und auf seiner dem Sockelteil zugewandten Seite mindestens einen ersten Steckanschluß und auf mindestens einer seiner anderen Seiten mindestens einen weiteren Steckanschluß aufweist, wobei ein erstes Führungs- und Formelement an einem Gehäuse, das mit mindestens einem dazu komplementären zweiten Führungs- und Formelement am Gehäuse eines Sockels beim Aufstecken des Verbindungssteckers auf den Sockel, zumindest im wesentlichen, starr in Eingriff bringbar ist, und durch mindestens einen, zumindest im wesentlichen, in der Trennfläche zwischen Verbindungsstecker und Sockelteil verschiebbaren Schiebers, der in Sperrstellung einen komplementären Hinterschnitt am Sockel hintergreift.

Der Erfindung liegt die Aufgabe zu Grunde, ein zylindrisches Bauteil zu schaffen, welches die erforderliche Länge aufweist und kostengünstig herstellbar ist.

Diese Aufgabe wird durch die Merkmale des Patentanspruches 1 gelöst. Vorteilhafte Ausgestaltungen ergeben sich aus den Unteransprüchen.

Erfindungsgemäß ist eine Steckverbindung zwischen zwei zylindrischen Bauteilen vorgesehen, welche zusammen ein Bauteil größerer axialer Länge ergeben. Dabei weist das erste Bauteil stirnseitig angeordnete Mitnahmeelemente und das zweite Bauteil korrespondierende Fenster auf, in welche die stirnseitigen Mitnahmeelemente durch eine Axialverschiebung einsteckbar sind. Damit ergibt sich eine kompakte Verbindung zwischen zwei zylindrischen Bauteilen, welche sowohl Umfangskräfte als auch Axialkräfte (in Druckrichtung) übertragen kann. Beide Bauteile bilden einen Überlappungsbereich mit einer vergrößerten Wandstärke, welche der Summe der Wandstärken der beiden Bauteile entspricht. Gegenüber bekannten Verbindungen, z. B. durch eine Mitnahmeverzahnung baut die erfindungsgemäße Verbindung in radialer Richtung sehr klein, d. h. es ergeben sich Vorteile bezüglich der radialen Baugröße.

Die stirnseitigen Mitnahmeelemente sind bevorzugt als Lappen ausgebildet, welche aus dem Zylindermantel ausgeklinkt werden und somit eine Stirnverzahnung oder Kronenverzahnung bilden. Die entsprechenden Fenster, mit denen die Kronenverzahnung in Eingriff gebracht wird, sind bei dem zweiten Bauteil in einem Übergangsbereich von einem größeren auf einen kleineren Innendurchmesser angeordnet. Dadurch kann die Stirnverzahnung in axialer Richtung in die Fenster eingeschoben werden, bis die Stirnkanten der Kronenverzahnung an den Fenstern anschlagen. Bei diesem Einschiebevorgang werden beide Bauteile durch den Überlappungsbereich teleskopartig gegeneinander geführt.

Nach einer bevorzugten Ausführungsform sind im Überlappungsbereich am zweiten, d. h. dem äußeren Bauteil Stützlappen freigeschnitten und am ersten, d. h. dem innen angeordneten Bauteil Fenster ausgeklinkt, in welche die Stützlappen formschlüssig eingreifen und somit Axialkräfte in entgegengesetzter Richtung (Zugrichtung) übertragen. Somit kann die erfindungsgemäße Verbindung Axialkräfte in beiden Richtungen übertragen, d. h. einerseits über die Stirnflächen der Stirnverzahnung und andererseits über die Stirnflächen der Stützlappen.

Nach einer bevorzugten Ausführungsform weisen die Stützlappen eine Vorform auf, welche ein Einschieben des inneren Bauteiles in das äußere Bauteil erlaubt. Durch Drücken von außen, z. B. mittels einer Vorrichtung wird die Vorform in eine Endform gebracht, was durch eine Art Schnappeffekt, d. h. aus einer konvexen in eine leicht konkave Form möglich ist.

Alternativ können die Stützlappen als federnde Zungen ausgebildet sein, welche beim Einschieben des inneren Bauteils zunächst nach außen gedrückt werden und in der Endposition beider Bauteile nach innen in die Fenster einrasten, nach Art einer Rastverbindung. Diese Variante erlaubt eine Montage ohne eine von außen eingreifende Vorrichtung. Die Zahl der Stützlappen und der stirnseitigen Lappen (Kronenverzahnung) ist unterschiedlich: da die Kronenverzahnung auch Umfangskräfte überträgt, die Stützlappen dagegen nicht, sind für die Kronenverzahnung bei einer bevorzugten Ausführungsform etwa dreißig Zähne vorgesehen, während für die Stützlappen nur eine geringere Anzahl, die sich an der zu übertragenden Axialkraft orientiert, notwendig ist.

Nach einer vorteilhaften Ausführung können die beiden Bauteile aus unterschiedlichen Werkstoffen hergestellt sein, wobei sich die Wahl des jeweiligen Werkstoffes aus den unterschiedlichen Anforderungen an das erste und das zweite Bauteil ergibt.

Nach einer bevorzugten Ausführungsform können beide Bauteile als Tiefziehteile hergestellt werden. Daraus ergeben sich Vorteile bezüglich der Herstellungskosten, insbesondere im Vergleich zum Drückwalzen.

Die erfindungsgemäße Verbindung ist besonders vorteilhaft bei Automatikgetrieben für Kraftfahrzeuge anwendbar, d. h. für einen aus zwei Teilzylindern zusammengesetzten Zylinder in einem Automatikgetriebe zur Aufnahme von Planetenradsätzen und/oder Schaltelementen. Bei dieser Anwendung ist es vorteilhaft, das erste Bauteil, d. h. den ersten Teilzylinder aus einem nicht magnetisierbaren Werkstoff herzustellen, z. B. aus Aluminium, einer Aluminiumlegierung oder aus einem austenitischen Stahl. Daraus ergibt sich der Vorteil, dass im Bereich des ersten Bauteiles ein Drehzahlsensor, weicher nach dem bekannten Hall-Effekt arbeitet, angeordnet werden kann, was bei üblichen Tiefziehstählen, die magnetisierbar sind, nicht möglich ist. Der Sensor kann somit die Drehzahl eines Getriebeteiles, z. B. einer Stegwelle eines Planetenradsatzes erfassen.

Die Aufgabe der Erfindung wird auch durch ein Verfahren mit den Merkmalen des Patentanspruches 15 gelöst. Danach werden beide Bauteile stirnseitig zueinander ausgerichtet und soweit ineinander geschoben, bis die Stirnflächen der Kronenverzahnung in den Fenstern des anderen Bauteiles anschlagen. Danach erfolgt eine Verriegelung durch die Stützlappen in der anderen entgegengesetzten Axialrichtung. Hierbei sind zwei Varianten möglich: die erste sieht vor, dass die Stützlappen mittels einer von außen angreifenden Vorrichtung in die Fenster des anderen Bauteiles hineingedrückt werden, wobei die Stützlappen aus einer konvexen Vorform in eine konkave Endform schnappen und dabei eine axiale Verspannung beider Bauteile bewirken.

Nach einer zweiten bevorzugten Variante erfolgt die axiale Verriegelung automatisch, d. h. die als elastischen Zungen ausgebildeten Stützlappen federn nach dem Einschieben des inneren Bauteils nach innen und rasten in den Fenstern ein. Hierfür ist keine Vorrichtung erforderlich.

Ein Ausführungsbeispiel der Erfindung ist in der Zeichnung dargestellt und wird im Folgenden näher beschrieben.

Es zeigen:
- Fig. 1: einen Zylinder, bestehend aus einem ersten und einem zweiten Teilzylinder, für ein Automatikgetriebe,
- Fig. 2a: einen Teilschnitt durch den ersten Teilzylinder,
- Fig. 2b: eine Teilansicht in Richtung A auf den ersten Teilzylinder,
- Fig. 3a: einen Teilschnitt durch den zweiten Teilzylinder,
- Fig. 3b: eine Ansicht in Richtung B auf den zweiten Teilzylinder,
- Fig. 4a: eine erfindungsgemäße Verbindung beider Teilzylinder als Einzelheit X aus Fig. 1 und
- Fig. 4b: die Einzelheit X in einer Ansicht.

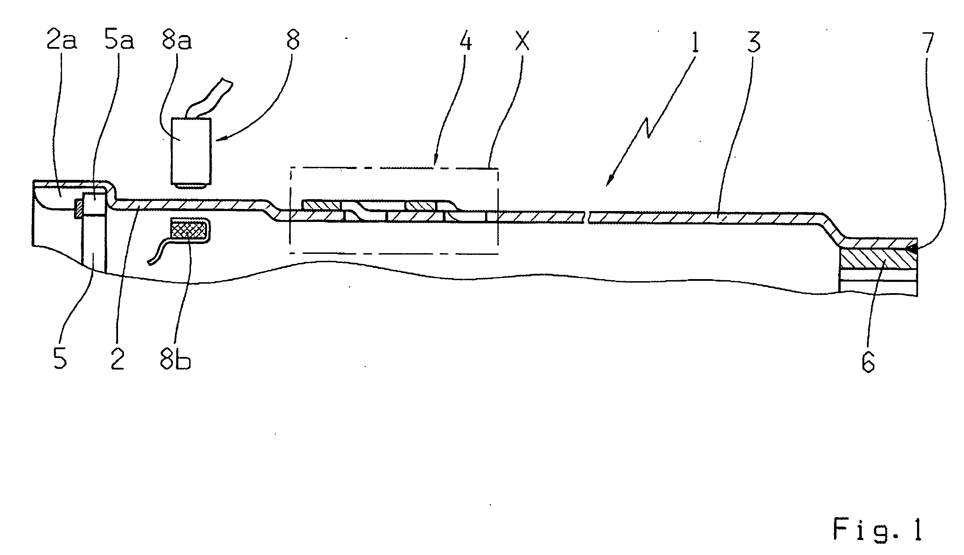

**Fig. 1** zeigt einen Axialschnitt durch einen Zylinder 1, welcher in einem Automatikgetriebe eines Kraftfahrzeuges verwendbar ist, und zwar zur Aufnahme eines nicht dargestellten Planetenradsatzes und von ebenfalls nicht dargestellten Schaltelementen. Der Zylinder 1 ist aus zwei Teilzylindern, einem ersten Teilzylinder 2 und einem zweiten Teilzylinder 3 zusammengesetzt, welche durch eine Steckverbindung 4 fest miteinander verbunden sind. Im äußeren stirnseitigen Bereich des Teilzylinders 2 ist eine Führungsscheibe 5 angeordnet, welche über eine Mitnahmeverzahnung 5a, 2a mit dem ersten Teilzylinder 2 verbunden ist. Die Führungsscheibe 5 ist Teil des nicht dargestellten Planetenradsatzes. Am entgegengesetzten Ende des Zylinders 1 ist ein Hohlrad 6 fest mit dem Teilzylinder 3 verbunden, d. h. durch eine Schweißnaht 7, wobei auch eine Mitnahmeverzahnung an Stelle der Schweißnaht 7 möglich wäre. Im Bereich des ersten Teilzylinders 2 ist ein Drehzahlsensor 8 angeordnet, welcher aus einem außerhalb des Teilzylinders 2 angeordneten, feststehenden Sensorteil 8a und einem innerhalb des ersten Teilzylinders 2 angeordneten, rotierenden Magnetring 8b besteht. Der erste Teilzylinder 2, welcher sich somit zwischen dem Sensorteil 8a und dem rotierenden Magnetring 8b befindet, ist aus einem nicht magnetisierbaren Material, vorzugsweise aus Aluminium, einer Aluminiumlegierung oder einem austenitischen Stahl wie beispielsweise V4A hergestellt. Damit ist der nach dem bekannten Hall-Effekt arbeitende Drehzahlsensor 8 funktionsfähig. Der zweite Teilzylinder 3 ist aus einem handelsüblichen Tiefziehstahl hergestellt und daher mit dem Hohlrad 6 verschweißbar. Beide Teilzylinder 2, 3 sind vorzugsweise Tiefziehteile, d. h. durch Tiefziehen aus einer Blechplatine hergestellt.

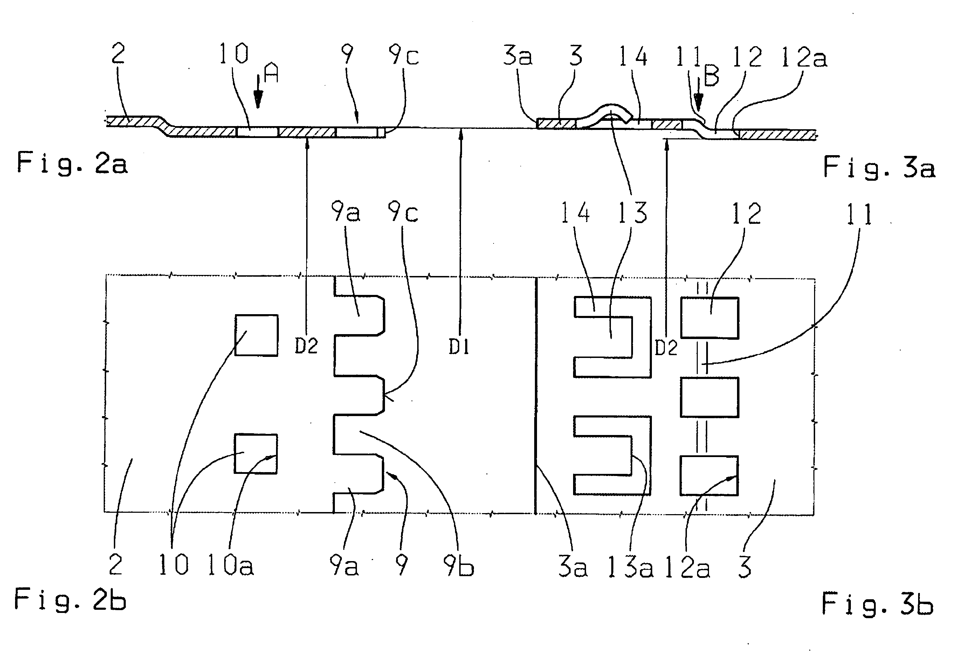

**Fig. 2a** und **Fig. 2b** zeigen den ersten Teilzylinder 2 in einem Schnitt und in einer Draufsicht (in Richtung A). Der erste Teilzylinder 2 weist stirnseitig, d. h. im Bereich der Verbindung 4 (Fig. 1) eine Stirn- oder Kronenverzahnung 9 auf, welche aus einer Vielzahl von stirnseitig angefasten Lappen oder Zähnen 9a und zwischen diesen angeordneten Lücken 9b besteht. Auf dem Umfang des Teilzylinders 2 sind ferner rechteckförmig oder quadratisch ausgebildete Öffnungen in Form von Fenstern 10 angeordnet, auf deren Bedeutung weiter unten eingegangen wird.

**Fig. 3a** und **Fig. 3b** zeigen den Teilzylinder 3 im Schnitt und in einer Draufsicht (in Richtung B). Der zweite Teilzylinder 3 weist eine Stirnkante 3a und im stirnseitigen Bereich einen Innendurchmesser D1 auf, welcher dem Außendurchmesser des ersten Teilzylinders 2 entspricht, und einen verringerten Innendurchmesser D2, welcher dem Innendurchmesser D2 des ersten Teilzylinders 2 entspricht. Der Übergang vom größeren Innendurchmesser D1 auf den kleineren Innendurchmesser D2 ist als Schräge 11 dargestellt. Im Bereich der Schräge 11 sind, über den Umfang verteilt, rechteckförmige Öffnungen in Form von Fenstern 12 aus dem Zylindermantel des zweiten Teilzylinders 3 ausgeschnitten, welche in ihrer Breite (in Umfangsrichtung) der Breite der Zähne 9a der Stirnverzahnung 9 des ersten Teilzylinders 2 entsprechen. Im Zylindermantel des zweiten Teilzylinders 3 sind ferner Zungen 13, so genannte Stützlappen, freigeschnitten, d. h. sie sind von einem etwa U-förmig ausgebildeten Spalt 14 umgeben. Wie aus Fig. 3a ersichtlich, sind die Stützlappen 13 im Querschnitt konvex gekrümmt und ragen etwas über die Spaltöffnung 14 nach außen. Die dargestellte Ausbildung der Stützlappen 13 stellt eine so genannte Vorform dar, d. h. eine Form vor der Montage der beiden Teilzylinder 2, 3. Dadurch ist es möglich, dass der erste Teilzylinder 2 in axialer Richtung in den zweiten Teilzylinder 3 eingeschoben werden kann, sodass die leicht angefasten Zähne 9a in Eingriff mit den Fenstern 12 kommen können. Die Fenster 12 weisen Anschlagflächen 12a auf, an welchen die Stirnseiten 9c der Stirnverzahnung 9 zum Anschlag kommen.

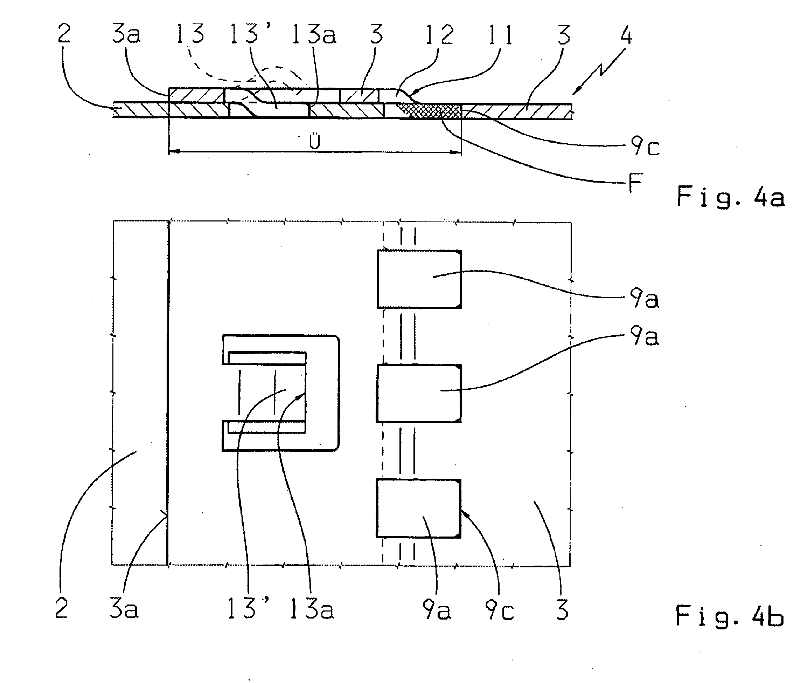

**Fig. 4a** und **Fig. 4b** zeigen die Einzelheit X aus Fig. 1, d. h. die Verbindung 4 der beiden Teilzylinder 2, 3 in vergrößerter Darstellung. Gleiche Teile sind mit gleichen Bezugszahlen gekennzeichnet. Die stirnseitigen Bereiche der ineinander geschobenen Teilzylinder 2, 3 bilden einen Überlappungsbereich ü, welcher von den Stirnflächen 9c der Stirnverzahnung 9 bis zur Stirnkante 3a des zweiten Teilzylinders 3 reicht. Die Vorform des Stützlappens 13 ist hier gestrichelt dargestellt. Der Stützlappen 13 ist durch eine nicht dargestellte Vorrichtung in die Position 13' (ausgezogene Linien) nach innen eingedrückt, sodass er mit seiner Stirnfläche 13a gegen die entsprechende Anlagefläche 10a des Fensters 10 drückt - dadurch wird eine axiale Verspannung der beiden Teilzylinder 2. 3 erzielt. Über diese Verbindung durch die Stützlappen 13' des zweiten Teilzylinders 3 können axial gerichtete Zugkräfte zwischen beiden Teilzylindern 2 3 übertragen werden. Druckkräfte in axialer Richtung werden über die Stirnverzahnung 9 übertragen. Umfangskräfte zwischen den beiden Teilzylindern 2. 3 werden ebenfalls über die Stirnverzahnung übertragen 9, allerdings über die seitlichen Flächen der Zähne 9a, welche in Fig. 4a als kreuzschratfierte Flache F dargestellt sind.

Abweichend vom dem dargestellten Ausführungsbeispiel können die Stützlappen 13 auch als elastisch federnde Zungen ausgebildet sein, welche beim Einschieben des ersten Teilzylinders in den zweiten Teilzylinder zunächst durch die Stirnfläche des ersten Teilzylinders nach außen gedrückt werden und - nach dem Anschlagen der Stirnflächen 9c an den Anschlagflächen 12a - in die Fenster 10 zurückfedern.

### Bezugszeichen

- 1: Zylinder
- 2: erster Teilzylinder
- 2a: Mitnahmeverzahnung
- 3: zweiter Teilzylinder
- 3a: Stirnkante
- 4: Verbindung (erster und zweiter Teilzylinder)
- 5: Führungsscheibe
- 5a: Mitnahmeverzahnung
- 6: Hohlrad
- 7: Schweißnaht
- 8: Drehzahlsensor
- 8a: Sensorteil
- 8b: Magnetring
- 9: Stirnverzahnung
- 9a: Zahn
- 9b: Lücke
- 9c: Stirnfläche
- 10: Fenster
- 10a: Anschlagfläche
- 11: Schräge
- 12: Fenster
- 12a: Anschlagfläche
- 13: Stützlappen
- 13': Stützlappen (Endform)
- 13a: Stirnfläche
- 14: Spalt

- D1: Außendurchmesser (erster Teilzylinder)
- D2: Innendurchmesser (erster Teilzylinder)
- F: Übertragungsfläche
- ü: Überlappungsbereich

## Patentansprüche

1. Verbindung eines ersten mit einem zweiten zylindrischen Bauteil zur Übertragung von Umfangs- und Axialkräfte, wobei das erste Bauteil (2) auf dem Umfang und stimseitig angeordnete Mitnahmeelemente (9) aufweist und das zweite Bauteil (3) den Mitnahmeelementen (9) zugeordnete Fenster (12) aufweist und die Bauteile (2, 3) stirnseitig zur Bildung eines Formschlusses zwischen Mitnahmeelementen (9) und Fenstern (12) ineinander steckbar sind, **dadurch gekennzeichnet, dass** die Mitnahmelemente (9) als aus den ersten Bauteil (2) ausgeklinkte Lappen (9a, 9c) ausgebildet sind, eine Stirnverzahnung (9) bilden, und stirnseitig an den Fenstern (12, 12a) anliegen sowie Axialkräfte in Druckrichtung übertragen und dass am zweiten Bauteil (3) im Überlappungsbereich (ü) Stützlappen (13), über den Umfang verteilt, freigeschnitten sind, am ersten Bauteil (2) den Stützlappen (13) zugeordnete Fenster (10) angeordnet sind und dass die Stützlappen (13) mit den Fenstern (10) in axialer Richtung verriegelbar sind.

2. Verbindung nach Anspruch 1, **dadurch gekennzeichnet, dass** die ineinandengesteckten Bauteile (2, 3) jeweils eine Stirnkante (9c, 3a) aufweisen und einen axialen Überlappungsbereich (ü) bilden und dass die Fenster (12) des zweiten Bauteiles (3) um den Abstand (ü) gegenüber der Stirnkante (3a) versetzt angeordnet sind.

3. Verbindung nach Anspruch 1 oder 2, **dadurch gekennzeichnet, dass** das zweite Bauteil (3) im Überlappungsbereich (ü) das äußere Bauteil (3) mit einem Innendurchmesser D1 bildet und dass der Innendurchmesser D1 im Bereich der Fenster (12) auf einen Innendurchmesser D2 eingezogen ist, weicher dem Innendurchmesser des ersten Bauteiles (2) entspricht.

4. Verbindung nach einem der Ansprüche 1 bis 3, **dadurch gekennzeichnet, dass** die Lappen (9a) In tangentialer Richtung an den Fenstern (12) anliegen und Übertragungsflächen F zur Übertragung von Umfangskräften bilden.

5. Verbindung nach Anspruch 4, **dadurch gekennzeichnet, dass** die Stützlappen (13) ais federnde Zungen ausgebildet sind, welche nach dem Ineinanderstecken der Bauteile (2, 3) in den Fenstern (10) federnd einrasten.

6. Verbindung nach einem der vorangehenden Ansprüche, **dadurch gekennzeichnet, dass** die Stützlappen eine Vorform (13) aufweisen, aus welcher sie in eine Endform (13') verformbar sind.

7. Verbindung nach einem der vorangehenden Ansprüche, **dadurch gekennzeichnet, dass** die Stützlappen (13, 13a) Axialkräfte in Zugrichtung übertragen.

## Claims

1. Connection of a first component to a second cylindrical component for transmitting circumferential and axial forces, the first component (2) having driving elements (9) which are arranged on the circumference and on the end side, and the second component (3) having windows (12) which are assigned to the driving elements (9), and it being possible for the components (2, 3) to be plugged into one another on the end side in order to form a positively locking connection between the driving elements (9) and the windows (12), **characterized in that** the driving elements (9) are configured as tabs (9a, 9c) which are notched out of the first component (2), form a spur toothing system (9), bear on the end side against the windows (12, 12a) and transmit axial forces in the compressive direction, and **in that** supporting tabs (13) are cut free, distributed over the circumference, in the overlap region (ü) on the second component (3), windows (10) which are assigned to the supporting tabs (13) are arranged on the first component (2), and **in that** the supporting tabs (13) can be locked with the windows (10) in the axial direction.

2. Connection according to Claim 1, **characterized in that** the components (2, 3) which are plugged into one another have in each case one end edge (9c, 3a) and form an axial overlap region (ü), and **in that** the windows (12) of the second component (3) are arranged offset with respect to the end edge (3a) by the spacing (ü).

3. Connection according to Claim 1 or 2, **characterized in that** the second component (3) forms the outer component (3) with an internal diameter D1 in the overlap region (ü), and **in that**, in the region of the windows (12), the internal diameter D1 is drawn into an internal diameter D2 which corresponds to the internal diameter of the first component (2).

4. Connection according to one of Claims 1 to 3, **characterized in that** the tabs (9a) bear against the windows (12) in the tangential direction and form transmission faces F for transmitting circumferential forces.

5. Connection according to Claim 4, **characterized in that** the supporting tabs (13) are configured as resilient tongues which, after the components (2, 3) are plugged into one another, latch resiliently in the windows (10).

6. Connection according to one of the preceding claims, **characterized in that** the supporting tabs have a preliminary shape (13), from which they can be deformed into a final shape (13').

7. Connection according to one of the preceding claims, **characterized in that** the supporting tabs (13, 13a) transmit axial forces in the tensile direction.

## Revendications

1. Connexion d'un premier à un deuxième composant cylindrique, pour le transfert de forces périphériques et axiales, le premier composant (2) présentant des éléments d'entraînement (9) disposés sur la périphérie et du côté frontal, et le deuxième composant (3) présentant des fenêtres (12) associées aux éléments d'entraînement (9), et les composants (2, 3) pouvant être enfichés l'un dans l'autre du côté frontal pour former un engagement par correspondance géométrique entre les éléments d'entraînement (9) et les fenêtres (12), **caractérisée en ce que** les éléments d'entraînement (9) sont réalisés sous forme de pattes (9a, 9c) fléchies hors du premier composant (2), forment une denture frontale (9) et s'appliquent du côté frontal contre les fenêtres (12, 12a), et transmettent aussi les forces axiales dans la direction de la pression et **en ce que** des pattes de support (13), réparties sur la périphérie, sont découpées dans le deuxième composant (3) dans la région de chevauchement (ü), des fenêtres (10) associées aux pattes de support (13) sont disposées sur le premier composant (2), et **en ce que** les pattes de support (13) peuvent être verrouillées aux fenêtres (10) dans la direction axiale.

2. Connexion selon la revendication 1, **caractérisée en ce que** les composants (2, 3) enfichés l'un dans l'autre présentent à chaque fois une arête frontale (9c, 3a) et forment une région de chevauchement axiale (ü) et **en ce que** les fenêtres (12) du deuxième composant (3) sont disposées de manière décalée de la distance (ü) par rapport à l'arête frontale (3a).

3. Connexion selon la revendication 1 ou 2, **caractérisée en ce que** le deuxième composant (3) forme, dans la région de chevauchement (ü), le composant extérieur (3) avec un diamètre intérieur D1 et **en ce que** le diamètre intérieur D1, dans la région des fenêtres (12), est réduit à un diamètre intérieur D2, qui correspond au diamètre intérieur du premier composant (2).

4. Connexion selon l'une quelconque des revendications 1 à 3, **caractérisée en ce que** les pattes (9a) s'appliquent dans la direction tangentielle contre les fenêtres (12) et forment des faces de transfert F pour transférer des forces périphériques.

5. Connexion selon la revendication 4, **caractérisée en ce que** les pattes de support (13) sont réalisées sous forme de langues élastiques qui s'encliquètent élastiquement dans les fenêtres (10) après l'enfichage l'un dans l'autre des composants (2, 3).

6. Connexion selon l'une quelconque des revendications précédentes, **caractérisée en ce que** les pattes de support présentent une préforme (13), à partir de laquelle elles peuvent être déformées dans une forme finale (13').

7. Connexion selon l'une quelconque des revendications précédentes, **caractérisée en ce que** les pattes de support (13, 13a) transfèrent les forces axiales dans la direction de traction.
